# EUROPEAN PATENT SPECIFICATION

(11) **EP 0 682 197 B1**
(45) Date of publication and mention of the grant of the patent: **14.06.2000**
(21) Application number: 95200179.0
(22) Date of filing: 26.01.1995
(51) Int. Cl.: F16J 12/00

(54) **High-pressure vessel and heat exchanger intended therefor**
Hochdruckbehälter und Wärmetauscher dafür
Récipient haute-pression et échangeur de chaleur associé

(30) Priority: 26.01.1994 BE 9400089
(43) Date of publication of application: 15.11.1995
(73) Proprietor: ENGINEERED PRESSURE SYSTEMS INTERNATIONAL N.V., 9140 Temse (BE)
(72) Inventor: De Vis, Edwig, B-1745 Marzenzele-Opwijk (BE); Raes, Herman, B-9250 Waasmunster (BE)
(74) Representative: Pieraerts, Jacques

(56) References cited:
- DE-A- 2 045 758
- GB-A- 2 135 901
- US-A- 4 359 336

## Description

This invention relates to a high-pressure vessel comprising a structural wall forming a high-pressure chamber and a heat exchanger for controlling the temperature in said high-pressure chamber.

High-pressure vessels are already applied since a long time in the industry, for example for cold isostatic presses to compress powders under high pressure or for hot isostatic presses to compress powders or to compress already formed pieces to make them pore free, or even also for hydrothermal processes, simulators, etc.

Such high-pressure systems can now also be applied to bring for example food products under high pressure and to obtain in this way a preserving effect. Such products can be put in such high-pressure vessels either packed in a flexible shape or also directly unpacked and can be kept therein under pressure during a limited period by means of a high-pressure liquid, whereby a better preserving effect is obtained.

In particular for treating food products, it is important to be able to keep the temperature in the high-pressure chamber under control. For such treatments, this temperature is usually comprised between -30°C and 100°C.

For controlling the temperature in the high-pressure chamber, it might be considered to bring the high-pressure liquid to the desired temperature and to circulate it through this chamber. Because of the high pressures, this is however technically difficult to achieve.

In practice it is already known to arrange a mantle for circulating a heating and/or cooling liquid around the structural wall of the high-pressure vessel. Such a system does, however, not allow an accurate temperature control, which is nevertheless for example required to obtain an optimal preserving effect. The present invention therefore relates to a high-pressure vessel wherein the heat exchanger comprises an at least double walled tube which is located in the high-pressure chamber, and at least one heat exchanging element provided between both walls of said tube.

Such a high-pressure chamber, wherein the heat exchanger is provided within the high-pressure chamber is already discloses in US-A-4359336. In the high-pressure vessel according to this US Patent the heat exchanger consists of a heat insulating mantle, a cylindrical bucket for the articles positioned within the insulating mantle and electrical heating elements arranged between the mantle and the bucket. The heat insulating mantle and the cylindrical bucket form a kind of double walled tube, between the walls of which the heat exchanging elements are provided as defined in the preamble of Claim 1. The high-pressure fluid used to pressurize the chamber, fills this chamber entirely, including the space between the mantle and the structural wall of the high-pressure vessel and the space between the bucket and the mantle, i.e. the space wherein the heating elements are arranged. A drawback of this high-pressure vessel is that the high-pressure fluid is not confined to the space within the bucket, i.e. within the interior of the heat exchanger, but penetrates between the walls of the heat exchanger and between this heat exchanger and the structural wall of the high-pressure vessel.

The invention has therefore as object to present a high-pressure vessel wherein, compared to high-pressure vessels having an external heat exchanger, the temperature can be kept better under control and wherein the high-pressure fluid is confined within the heat exchanger.

To this end, the high-pressure vessel according to the invention is characterised in that said tube is fittingly slid in said high-pressure chamber and has on outer diameter corresponding to the inner diameter of said high-pressure chamber , the heat exchanging element comprising at least one channel provided between both walls of said tube for circulating a heating and/or cooling fluid, and/or a heating element provided between both walls of said tube, the walls of the tube engaging each other and being arranged to separate the heat exchanging element from the interior of the high-pressure chamber.

Since the walls of the heat exchanger engage each other and since the tube forming the heat exchanger is fittingly slid in the high-pressure chamber or engages in other words the structural wall of the high-pressure vessel, the high-pressure fluid can be confined to the space within the heat exchanger because the high pressure exerted in that case onto the inner wall of the heat exchanger are received by the structural wall of the high-pressure vessel through the intermediary of the outer wall of the heat exchanger. As a result thereof, there is thus a larger choice of materials which are suited for this heat exchanging tube.

In case at least one channel is provided between both walls of said tube for circulating a heating and/or cooling fluid, the high-pressure vessel according to the invention offers moreover the following advantage.

The heating and/or cooling fluid circulated through the heat exchanger may be corrosive and even very corrosive, in particular when it is used for lower temperatures. By using a double walled tube between which this fluid circulates, this fluid does not come into contact with the structural wall, which is made in practice, due to the required strength, of non stainless steel.

As depicted hereinabove, use can on the contrary be made of weaker materials for the heat exchanging tube, amongst which stainless steel is preferred.

The invention also relates to a heat-exchanger for controlling the temperature in a high-pressure chamber of a high-pressure vessel comprising an at least double walled tube arranged to be located in said high-pressure chamber, and at least one heat exchanging element provided between both walls of said tube. This heat exchanger is characterised in that the tube is arranged for being fittingly slid in said high-pressure chamber and has an outer diameter corresponding to the inner diameter of said high-pressure chamber, the heat exchanging element comprising at least one channel provided between both walls of said tube for circulating a heating and/or cooling fluid, and/or a heating element provided between both walls of said tube, the walls of the tube engaging each other and being arranged to separate the heat exchanging element from the interior of the high-pressure chamber.

By using such a heat exchanger, a more direct and thus better temperature control is possible whilst the wall of the high-pressure vessel itself is further protected against possible corrosion.

Further advantages and particularities of the invention will appear from the following description of a high-pressure vessel and of a heat exchanger used therein according to the invention. This description is only given by way of example and is clearly not intended to limit the scope of the invention. The used reference numerals relate to the annexed figure representing schematically a high-pressure vessel according to the invention and this mainly in cross section.

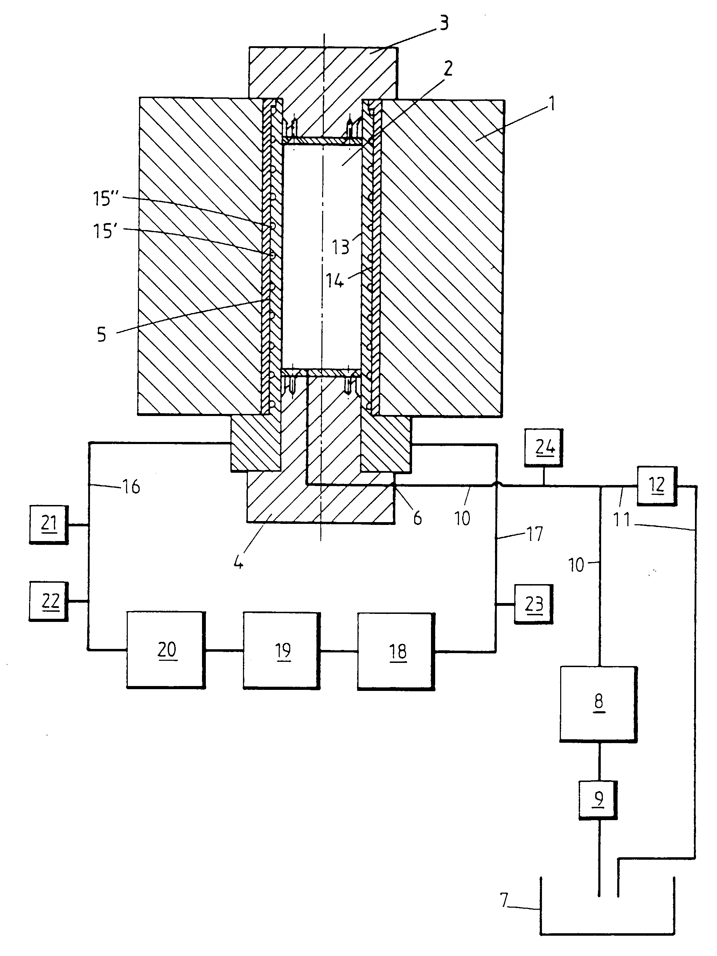

The high-pressure vessel according to the particular embodiment of the invention shown in the single figure consists mainly of a structural wall 1 forming a high-pressure chamber 2, a top 3 and a bottom cover 4 to close this chamber 2 and a heat exchanger 5 along the inner wall of the high-pressure chamber 2.

The structural wall 1 consists more particularly of a thick-walled steel cylinder which can be made single-walled or multi-walled. This steel cylinder is provided for receiving a pressure in the high-pressure chamber 2 of 2000 to 14000 bars, and in particular for receiving a pressure of 4000 to 10000 bars.

The covers 3, 4 are either screwed onto the vessel wall 1, or are maintained by a non shown frame taking up the end load on the covers 3, 4. Usually they have one or more connections 6 to let a high-pressure liquid in and out of the vessel, in particular the bottom cover 4, whereas the other cover 3 has possibly connections to bring the product to be treated directly in and out of the vessel, and vice versa. In this latter case, a flexible partition wall can be provided in the high-pressure chamber 2 to prevent the high-pressure liquid from coming into contact with the product to be treated. In case of food products they will, however, usually be introduced in flexible packages into the high-pressure chamber 2. This offers the important advantage that the products can be treated in their final package so that there is afterwards no risk for contamination.

For creating a high pressure in the chamber 2 the shown pressure vessel comprises a reservoir 7 for high-pressure liquid, for example water, a high-pressure pump 8 for pumping liquid out of the reservoir 7 through a filter 9 via a pipe 10 into the high pressure chamber 2. The pipe 10 is provided with a branch 11 which is connected back to the reservoir 7 via a valve 12. Preferably, a pressure measurement 24 is also provided on the pipe 10.

The heat exchanger 5 from the shown high-pressure vessel consists of a double walled tube 13, 14 which is fittingly slid in the high-pressure chamber 2, and which has an outer diameter corresponding to the inner diameter of the high-pressure chamber. Possibly this heat exchanger could comprise further additional walls.

The heat exchanging element from the heat exchanger 5 according to the invention is provided between both walls 13, 14 of the tube. This element can possibly be formed by an electrical resistance or can comprise such a resistance.

In the shown preferred embodiment, a spiral channel 15 for circulating a heating and/or cooling fluid is provided between both walls 13, 14 of the heat exchanging tube 5. The spiral channel 15 consists more specifically of an upward branch 15' connected to a supply pipe 16 and a downward branch 15'' connected to the discharge pipe 17. The discharged heating and/or cooling fluid arrives in a reservoir 18, from which it is pumped by a circulating pump 19 over a heat exchanger 20 again in the spiral channel 15. A temperature measurement 21 and a pressure measurement 22 are preferably provided on the supply pipe 16, whilst a temperature measurement 23 is preferably also provided on the discharge pipe 17. It will be clear that possibly two or more parallel spiral channels 15 can be provided or even channels according to another pattern, for example according to a block pattern, having vertical branches connected by horizontal annular portions. Use of spiral channels 15 offers however the advantage that smaller tensions are build up in the area of these channels, so that the risk on damages to the heat exchanger 5 due to the high pressures is considerably smaller.

In order to prevent corrosion, the heat exchanger 5 according to the invention is preferably made of stainless steel. In the shown embodiment this heat exchanger 5 consists of two stainless steel cylinders 13, 14 fitting into one another. The channel 15 is obtained by applying a groove in the outer wall of the inner cylinder 13. At the top and at the bottom, both cylinders 13, 14 are welded to one another or are fixed against one another by means of seals.

Important advantages of the high-pressure vessel and of the heat exchanger 5 used therein according to the invention can be summarized in short as follows :
1. An entire separation of heating and cooling system and the circuit of high-pressure liquid and/or liquid product to be treated.
2. The possibility to test the functioning of the tube shaped heat exchanger before fixing it in the high-pressure chamber.
3. The much quicker influence of the temperature adjustment on the required temperature in the liquid of the high-pressure chamber compared to a heating/cooling at the outside of the high-pressure vessel.
4. Avoiding contact between the heating/cooling liquid or heating elements and the walls of the high-pressure vessel, whereby possible non controllable corrosion is avoided.

## Claims

1. A high-pressure vessel comprising a structural wall (1) forming an high-pressure chamber (2) and a heat exchanger (5) for controlling the temperature in said high-pressure chamber (2), the heat exchanger (5) comprising an at least double walled tube (13, 14), located in said high-pressure chamber (2), and at least one heat exchanging element (15) provided between both walls (13, 14) of said tube, characterised in that the tube (13, 14) is fittingly slid in said high-pressure chamber (2) and has an outer diameter corresponding to the inner diameter of said high-pressure chamber (2), the heat exchanging element comprising at least one channel (15) provided between both walls (13, 14) of said tube for circulating a heating and/or cooling fluid, and/or a heating element provided between both walls (13, 14) of said tube, the walls (13, 14) of the tube engaging each other and being arranged to separate the heat exchanging element from the interior of the high-pressure chamber (2).

2. A high-pressure vessel according to claim 1, characterised in that at least one channel (15) is provided between both walls (13, 14) of said tube for circulating a heating and/or cooling fluid.

3. A high-pressure vessel according to claim 2, characterised in that said channel (15) extends mainly spirally along said tube (13, 14).

4. A high-pressure vessel according to any one of the claims 1 to 3, characterised in that said tube (13, 14) is made of stainless steel.

5. A high-pressure vessel according to any one of the claims 1 to 4, characterised in that said structural wall (1) is provided for receiving a pressure of 2000 to 14000 bars, more particularly for receiving a pressure of 4000 to 10000 bars.

6. A high-pressure vessel according to any one of the claims 1 to 5, characterised in that said tube (13, 14) has a total wall thickness comprising about 3 to 30 % of the thickness of said structural wall (1), more particularly about 3 to 20 % of this latter thickness.

7. A high-pressure vessel according to any one of the claims 1 to 6, characterised in that it is connected to a high-pressure pump (8) for pumping a liquid under high pressure in said high-pressure chamber (2).

8. A high-pressure vessel according to claim 7, characterised in that said high-pressure chamber (2) is divided by a flexible partition wall in at least a first compartment for product to be treated under high pressure and a second compartment for said high-pressure liquid.

9. A high-pressure vessel according to claim 7 or 8, characterised in that said high-pressure chamber (2) can be closed off by means of at least one removable cover (3, 4).

10. A heat exchanger for controlling the temperature in a high-pressure chamber (2) of a high-pressure vessel comprising an at least double walled tube (13, 14), arranged to be located in said high-pressure chamber (2), and at least one heat exchanging element (15) provided between both walls (13, 14) of said tube, characterised in that the tube (13, 14) is arranged for being fittingly slid in said high-pressure chamber (2) and has an outer diameter corresponding to the inner diameter of said high-pressure chamber (2), the heat exchanging element comprising at least one channel (15) provided between both walls (13, 14) of said tube for circulating a heating and/or cooling fluid, and/or a heating element provided between both walls (13, 14) of said tube, the walls (13, 14) of the tube engaging each other and being arranged to separate the heat exchanging element from the interior of the high-pressure chamber (2).

## Patentansprüche

1. Hochdruckbehälter, welcher eine tragende Wand (1) enthält, die eine Hochdruckkammer (2) bildet, und einen Wärmetauscher (5) zur Kontrolle der Temperatur in genannter Hochdruckkammer (2), wobei der Wärmetauscher (5) ein zumindest doppelwandiges Rohr (13, 14) enthält, positioniert in genannter Hochdruckkammer (2), und zumindest ein Wärmetauscherelement (15) zwischen beiden Wänden (13, 14) des genannten Rohres vorhanden ist, dadurch gekennzeichnet, dass das Rohr (13, 14) passend in genannte Hochdruckkammer (2) geschoben wird und einen Aussendurchmesser entsprechend dem Innendurchmesser genannter Hochdruckkammer (2) hat, das Wärmetauscherelement umfasst zumindest einen Kanal (15) zwischen den beiden Wänden (13, 14) des genannten Rohres zur Zirkulation einer Heiz- und/oder Kühlflüssigkeit, und/oder ein Heizelement zwischen den beiden Wänden (13, 14) des genannten Rohres, wobei die Wände (13, 14) des Rohres einander berühren und so angeordnet sind, um das Wärmetauscherelement vom Inneren der Hochdruckkammer (2) zu trennen.

2. Hochdruckbehälter nach Anspruch 1, dadurch gekennzeichnet, dass zumindest ein Kanal (15) zwischen den beiden Wänden (13, 14) des genannten Rohres zur Zirkulation einer Heiz- und/oder Kühlflüssigkeit vorhanden ist.

3. Hochdruckbehälter nach Anspruch 2, dadurch gekennzeichnet, dass der genannte Kanal (15) sich nahezu spiralförmig entlang des genannten Rohres (13, 14) erstreckt.

4. Hochdruckbehälter nach einem der Ansprüche 1 bis 3, dadurch gekennzeichnet, dass das genannte Rohr (13, 14) aus rostfreiem Stahl hergestellt ist.

5. Hochdruckbehälter nach einem der Ansprüche 1 bis 4, dadurch gekennzeichnet, dass die genannte tragende Wand (1) ausgelegt ist, um einen Druck von 2000 bis 14000 bar zu empfangen, mehr insbesondere um einen Druck von 4000 bis 10000 bar zu empfangen.

6. Hochdruckbehälter nach einem der Ansprüche 1 bis 5, dadurch gekennzeichnet, dass das genannte Rohr (13, 14) eine Gesamtwanddicke von etwa 3 bis 30% der Dicke der genannten tragenden Wand (1) hat, mehr insbesondere etwa 3 bis 20% letzterer Dicke.

7. Hochdruckbehälter nach einem der Ansprüche 1 bis 6, dadurch gekennzeichnet, dass es verbunden ist mit einer Hochdruckpumpe (8), zum Pumpen einer Flüssigkeit unter Hochdruck in die genannte Hochdruckkammer (2).

8. Hochdruckbehälter nach Anspruch 7, dadurch gekennzeichnet, dass die genannte Hochdruckkammer (2) durch eine flexible Trennwand unterteilt wird in zumindest ein erstes Abteil für Produkt zu behandeln unter Hochdruck, und ein zweites Abteil für die genannte Hochdruckflüssigkeit.

9. Hochdruckbehälter nach Anspruch 7 oder 8, dadurch gekennzeichnet, dass die genannte Hochdruckkammer (2) durch mindestens eine abnehmbare Abdeckung (3, 4) abschliessbar ist.

10. Wärmetauscher zur Steuerung der Temperatur in einer Hochdruckkammer (2) eines Hochdruckbehälters, der ein mindestens doppelwandiges Rohr (13, 14), ausgelegt zur Positionierung in der genannten Hochdruckkammer (2), enthält, und mindestens ein Wärmetauscherelement (15) zwischen den beiden Wänden (13, 14) des genannten Rohres, dadurch gekennzeichnet, dass das Rohr (13, 14) ausgelegt ist, um passend in die genannte Hochdruckkammer (2) einschiebbar zu sein, und einen Aussendurchmesser entsprechend dem Innendurchmesser der genannten Hochdruckkammer (2) hat, das Wärmetauscherelement mindestens einen Kanal (15) zwischen den beiden Wänden (13, 14) des genannten Rohres enthält zur Zirkulation einer Heiz- und/oder Kühlflüssigkeit, und/oder ein Heizelement zwischen beiden Wänden (13, 14) des genannten Rohres, wobei die Wände (13, 14) des Rohres einander berühren und so angeordnet sind, um das Wärmetauscherelement vom Inneren der Hochdruckkammer (2) zu trennen.

## Revendications

1. Récipient haute pression comprenant une paroi structurale (1) formant une chambre à haute pression (2) et un échangeur de chaleur (5) pour régler la température dans ladite chambre à haute pression (2), l'échangeur de chaleur (5) comprenant un tube à double paroi (13, 14) au moins, positionné dans la chambre à haute pression (2), et au moins un élément d'échange de chaleur (15) prévu entre les deux parois (13, 14) dudit tube, caractérisé en ce que le tube (13, 14) est adapté à coulissement dans la chambre à haute pression (2) et a un diamètre extérieur correspondant au diamètre intérieur de la chambre à haute pression (2), l'élément d'échange de chaleur comprenant au moins un canal (15) prévu entre les deux parois (13, 14) dudit tube pour faire circuler un fluide de chauffage et/ou de refroidissement, et/ou un élément chauffant prévu entre les deux parois (13, 14) du tube précité, les parois (13, 14) du tube s'engageant mutuellement et étant agencées pour séparer l'élément d'échange de chaleur de l'intérieur de la chambre à haute pression (2).

2. Récipient haute pression suivant la revendication 1, caractérisé en ce qu'au moins un canal (15) est prévu entre les deux parois (13, 14) du tube susdit pour faire circuler un fluide de chauffage et/ou de refroidissement.

3. Récipient haute pression suivant la revendication 2, caractérisé en ce que le canal (15) précité s'étend principalement en spirale le long dudit tube (13, 14).

4. Récipient haute pression suivant l'une quelconque des revendications 1 à 3, caractérisé en ce que le tube (13, 14) est fait d'acier inoxydable.

5. Récipient haute pression suivant l'une quelconque des revendications 1 à 4, caractérisé en ce que la paroi structurale (1) est prévue pour admettre une pression de 2000 à 14.000 bars, plus particulièrement pour admettre une pression de 4000 à 10.000 bars.

6. Récipient haute pression suivant l'une quelconque des revendications 1 à 5, caractérisé en ce que le tube (13, 14) précité a une épaisseur de paroi totale constituant environ 3 à 30% de l'épaisseur de la paroi structurale (1) précitée, plus particulièrement environ 3 à 20% de cette dernière épaisseur.

7. Récipient haute pression suivant l'une quelconque des revendications 1 à 6, caractérisé en ce qu'il est relié à une pompe haute pression (8) pour pomper un liquide sous haute pression dans la chambre à haute pression (2) précitée.

8. Récipient haute pression suivant la revendication 7, caractérisé en ce que la chambre à haute pression (2) est divisée par une paroi de séparation flexible en au moins un premier compartiment pour un produit à traiter sous haute pression et un second compartiment pour le liquide sous haute pression précité.

9. Récipient haute pression suivant l'une ou l'autre des revendications 7 et 8, caractérisé en ce que la chambre à haute pression (2) peut être fermée au moyen d'au moins un couvercle amovible (3, 4).

10. Echangeur de chaleur pour régler la température dans une chambre à haute pression (2) d'un récipient haute pression comprenant un tube à double paroi (13, 14) au moins, agencé pour être placé dans la chambre à haute pression (2), et au moins un élément d'échange de chaleur (15) prévu entre les deux parois (13, 14) dudit tube, caractérisé en ce que le tube (13, 14) est agencé pour être amené à coulisser de façon appropriée dans la chambre à haute pression (2) et a un diamètre extérieur correspondant au diamètre intérieur de ladite chambre à haute pression (2), l'élément d'échange de chaleur comprenant au moins un canal (15) prévu entre les deux parois (13, 14) dudit tube pour faire circuler un fluide de chauffage et/ou de refroidissement, et/ou un élément chauffant prévu entre les deux parois (13, 14) du tube susdit, les parois (13, 14) du tube s'engageant mutuellement et étant agencées pour séparer l'élément d'échange de chaleur de l'intérieur de la chambre à haute pression (2).
